# EUROPEAN PATENT SPECIFICATION

(11) **EP 1 391 599 B1**
(45) Date of publication and mention of the grant of the patent: **24.03.2010**
(21) Application number: 03255042.8
(22) Date of filing: 13.08.2003
(51) Int. Cl.: F02D 19/06, F02D 9/10, F02D 11/10, F16K 1/22

(54) **Engine system for an alternatively fuelled vehicle**
Motor für ein Fahrzeug, das mehrere Kraftstoffe verwenden kann
Moteur pour un vehicule utilisant plusieurs carburants

(30) Priority: 13.08.2002 GB 0218782
(43) Date of publication of application: 25.02.2004
(73) Proprietor: T Baden Hardstaff Limited, Kingston-on-Soar, Nottingham NG11 0DF (GB)
(72) Inventor: Fletcher, Trevor Lee, Nr.Loughborough,Leicestershire LE12 5NB (GB)
(74) Representative: Johnstone, Helen Margaret

(56) References cited:
- DE-A- 4 035 871
- DE-A- 19 912 231
- US-A- 5 979 405
- PATENT ABSTRACTS OF JAPAN vol. 1997, no. 01, 31 January 1997 (1997-01-31) & JP 08 232787 A (TOYOTA MOTOR CORP), 10 September 1996 (1996-09-10)

## Description

This invention relates to engine systems of the type having an engine that bums a gaseous fuel, and particularly, but not exclusively to an engine system for an alternatively fuelled vehicle.

An alternatively fuelled vehicle may be one that comprises, for example an internal combustion engine, known as a dedicated gas engine, which bums only gaseous fuels.

The invention may also relate to an engine system that runs off hydrogen and comprises a fuel cell to convert the energy obtained from the hydrogen into electrical energy.

In another type of alternatively fuelled vehicle, the engine may comprise an internal combustion engine known as a dual fuel engine. This type of engine is adapted to use a conventional fuel such as petrol or diesel. The conventional fuel is used in varying quantities to produce a heat source to ignite an alternative source of fuel in the form of a gas.

The invention relates particularly, but not exclusively to engines that run on diesel and another fuel source such as compressed or liquid natural gas.

Diesel engines have been used for decades in industrial power generation, cogeneration power systems, locomotives, marine applications, and other engine markets. However, as environmental standards become stricter, users of diesel engines are looking for ways to lower emissions without reducing engine power.

Dual-fuel systems are therefore gaining in popularity because they have the potential to reduce the amount of diesel fuel used.

For example, DE 3800585 describes a dual fuel engine wich permits continuous operation with rapelled oil and diesel fuel.

It is also possible to convert a traditional diesel engine into a dual-fuel engine capable of running on natural gas as well as diesel, with no loss of power. It is becoming increasingly popular for users of diesel engines to convert their engines to dual-fuel engines using natural gas as well as diesel. This is because an engine running on natural gas has various advantages including the fact that it is a much cleaner engine, and therefore is environmentally friendly.

A known dual-fuel engine system comprises an electronically controlled engine configuration that uses diesel fuel and natural gas. Diesel is used as the ignition source. The engine system then switches to natural gas once it has reached operating temperature. Typically, in such engines, more than 70% of fuel used is natural gas. This results in lower emissions.

Dual-fuel engine systems are particularly relevant to heavy-duty vehicles. Such vehicles, typically, are articulated, having a tractor unit which is close coupled to a trailer. The trailer is adapted to support a container holding goods to be transported. The trailer is close-coupled to the tractor unit for aerodynamic reasons, and because of the increased storage volume that is available compared to other arrangements. Trailers of this type are known as semi-trailers. A tractor unit has a "fifth wheel" for engagement with the semi-trailer.

Such vehicles are often used for long haul journeys frequently travelling 500 miles or more before returning to base.

In known dual-fuel engine systems it is necessary to have, among other things, a cryogenic tank for storing liquefied natural gas. The tank is stored on the chassis of the tractor unit, and, because of the available space can only be of a limited size. Typically, the tank is large enough to hold between 83kg to 180kg of natural gas. This allows, in heavy duty operation, a 44 tonne articulated vehicle to travel approximately 230 miles, and a long distance lighter duty operation vehicle to cover approximately 440 miles. These figures will, of course, vary depending on weight of vehicle plus load, and fuel consumption performance.

A problem with existing dual-fuel engine systems is the limited mileage that can be covered by a vehicle on one tank of liquefied natural gas. At present the natural gas fuelling infrastructure in most countries is almost non-existent. This means that vehicles that travel long distances before returning to base for refuelling cannot benefit from a clean fuel operation system due to the lack of facilities for refuelling.

According to a first aspect of the present invention there is provided an engine system for use with a vehicle comprising a first unit and a second unit, the engine system comprising:
an engine;
a first reservoir for holding a first fuel;
a supply system extending from the first reservoir to the engine, the supply system comprising a first supply tube having first and second ends and extending from the first reservoir to a first coupling means, and a second supply tube having first and second ends extending from the first coupling means towards the engine, the first and second supply tubes being releasably sealingly attachable to one another at their respective first ends, by means of the first coupling means;
characterised in that the engine is locatable on the first unit and the first reservoir is locatable on the second unit, the engine system further comprises support means for supporting the supply system, which support means is adapted to rotate through substantially 180° about an axis,
and in that the first coupling means is adapted to withstand a predetermined tension between the first and second supply tubes, and the first coupling means being adapted to cause uncoupling of the first and second supply tubes when the tension between the supply tubes is greater than the predetermined tension, the first coupling means further comprising sealing means for sealing the first end of the first supply tube after uncoupling of the first and second supply tubes.

According to a second aspect of the present invention there is provided a vehicle comprising a first unit and a second unit attachable to the first unit, and further comprising an engine system comprising:
an engine positionable on the first unit;
a first reservoir for holding a first fuel and positionable on the second unit;
a supply system extending from the first reservoir to the engine, the supply system comprising a first supply tube having first and second ends and extending from the first reservoir to a first coupling means towards the engine, and a second supply tube extending from the first coupling means, the first and second supply tubes being releasably sealingly attachable to one another by means of the first coupling means;
characterised in that the engine system further comprises support means for supporting the supply system, which support means is adapted to rotate through substantially 180° about an axis,
and in that the first coupling means is adapted to withstand a predetermined tension between the first and second supply tubes, the first coupling means being adapted to cause uncoupling of the first and second supply tubes when the tension between the supply tubes is greater than the predetermined tension, the first coupling means further comprising sealing means for sealing the first end of the first supply tube after uncoupling of the first and second supply tubes.

Preferably the first fuel comprises a gas, and more preferably the first fuel comprises a compressed gas such as natural gas.

Alternatively, the first fuel comprises any liquid or gaseous fuel such as natural gas or hydrogen.

Preferably, the vehicle comprises an articulated vehicle, the first unit comprising a tractor unit, and the second unit comprising a trailer.

Preferably the first and second units are pivotably connectable to one another to form an articulated vehicle.

The engine is usually positioned on a tractor unit of an articulated vehicle. Due to the constraints of the space available in the tractor unit, it has not been possible, as explained herein above, to develop an engine system capable of running on an alternative fuel which would allow long distances to be covered by the vehicle in which the engine system had been installed.

It has previously been thought impossible to develop an engine system running from a gas such as natural gas because it had been thought impossible to place the first reservoir containing the compressed gas anywhere other than in close proximity to the engine.

This is because, particularly if the engine system is to be incorporated into a vehicle comprising a tractor unit and a semi-trailer, it has not been possible to overcome problems which prevented the location of the first reservoir on the semi-trailer.

The main problems which prevented the positioning of the first reservoir on the semi-trailer are that when the first reservoir is so located, the supply system, comprising a pipe or other conduit must extend from the reservoir to the engine. This means that in a vehicle of the type described above, the pipe or other conduit will extend across from the semi-trailer to the tractor unit

One of the most critical safety issues has been the possibility of a driver, when disconnecting the semi-trailer from the tractor unit, inadvertently forgetting to disconnect the supply system between the reservoir and the engine. In such an eventuality the disconnection of the semi-trailer could result in an excess flow of gases from the disconnected supply pipe rendering the system unsafe.

US 4865077 discloses a liquid petroleum gas hose breakaway coupling. The coupling comprises two internal valves, each being located on opposite halves of the coupling, together with a restraining wire which is connected to one end of the coupling. The two halves of the coupling separate when a predetermined force is applied to the coupling by means of the restraining wire. After the coupling has separated, the internal in each half of the coupling seals to prevent flow from the hoses.

EP 1236948 describes a device for removably connecting a fuel supply pipeline with a dispensing element, such as in a petrol filling station. The device comprises a pair of tubular pipe unions, each having an internal valve, which are detachably connected together. If excessive force is applied to the coupling, the unions detach from one another and the internal valves close to prevent leakage of the fuel.

GB 2288374 discloses a liquid gas fuel system for vehicles. The system comprises a plurality of tanks each having a flow control valve and each connected by a non-return valve to a single receiver which feeds the engine of the vehicle. If the pipe from a tank to the receiver fractures, the system is arranged to prevent leakage of fuel.

By means of the present invention, should a driver inadvertently forget to disconnect the supply pipe when disconnecting the semi-trailer from the tractor unit, the tension between the first and second supply tubes will exceed the predetermined tension. Under such circumstances, the first coupling means will cause automatic decoupling of the first and second supply tubes and the sealing means will, at the same time, seal the first ends of the first supply tube, thus limiting, or preventing completely escape of gas.

Preferably, the first coupling means comprises a break-away coupling.

The break away coupling ensures that should the semi-trailer be disconnected from the tractor unit without first disconnecting the gas supply, then the break away coupling allows a controlled break away condition to occur whereby it releases rapidly stored pressure to prevent hose whip and then closes to prevent any further flow of gas.

Preferably, the first coupling means further comprises second sealing means for sealing the first end of the second supply tube after uncoupling.

Advantageously, the first coupling means comprises manual de-coupling means for allowing manual de-coupling of the first and second supply tubes under conditions when the tension between the first and second supply tubes is below the predetermined tension.

Preferably the manual de-coupling means comprises a sliding collar or sleeve. The manual de-coupling means automatically seals each of the first and second supply tubes when operated.

Conveniently, each of the first and second supply tubes comprises a flexible pipe. Alternatively, one or both of the first and second supply tubes comprises a fixed pipe.

Another problem is that the supply system could foul the semi-trailer under normal turning operations of the vehicle.

US 5713592 describes an apparatus for supporting hydraulic or pneumatic hoses or electric cables which extend between and tractor and trailer portions of an articulated vehicle. The apparatus comprises an elongate member supporting a conduit which in turn accommodates the hoses or cables. The elongate member is arranged to pivot at a point on the tractor unit forward of the fifth wheel coupling.

By means of the support means, the supply system is moveable through substantially 180° about the axis about which the tractor unit is pivotable relative to the semi-trailer. This reduces the chances that the supply system is able to foul the semi-trailer under normal turning operations of the vehicle.

The support means for supporting the supply system is rotatable and when installed in a vehicle having a tractor unit and a semi-trailer, is adapted to rotate about the fifth wheel of the semi-trailer. The fact that the support means can rotate in this way prevents the supply system from fouling the trailer corners.

Preferably, the tractor unit comprises a chassis, and the support means is preferably mounted on the chassis of the tractor unit, although it could be mounted on the semi-trailer.

Preferably the first and second sealing means each comprise a coupling nozzle sealingly attached to the first and second supply tubes respectively. The coupling nozzles protect each supply tube from dust and dirt and prevents loss of gas. They also prevent any other service lines being inadvertently connected to the break-away coupling.

Preferably, the engine system comprises at least one pressure relief device associated with the first reservoir. This relief device allows safe discharge of gas in the event of a fire.

Advantageously the engine system further comprises a first shut off valve associated with the first reservoir. The shut off valve ensures shut off of the reservoir in the event of the disconnecting of the electrical supply to the semi-trailer, and on the switching off of the trailer, thus disconnecting the electrical supply to the trailer.

The engine system further comprises an excess flow valve associated with the first reservoir which valve automatically closes in the event of any gas escaping at a rate greater than that occurring in normal engine use. The excess flow valve may take any suitable form. For example, it may be operated electrically, hydraulically or by air.

Preferably, the engine system further comprises a controller which regulates the pressure of the gas emitted from the first reservoir. Typically the pressure is reduced from between about 200 and 250 bars to approximately 8 bars. High pressure increases storage weight.

In some engine systems, the pressure of the gas emitted from the first reservoir may be higher and may be for example, 350 bars or more. The pressure may be reduced to any required pressure.

Conveniently, the system further comprises a second reservoir for holding a second fuel. Preferably the second fuel comprises a liquid gas.

Alternatively, the second fuel comprises a compressed gas such as natural gas or hydrogen.

Preferably, the second fuel in the form of liquid natural gas, is positioned on the tractor unit and will thus provide a fuel source for the tractor unit when disconnected from the semi-trailer.

Advantageously the engine system further comprises a third reservoir for holding a third fuel. Preferably the third fuel comprises diesel.

The presence of the third fuel means that the engine system may comprise a dual fuel engine system.

Advantageously the engine system further comprises a third supply tube extending from the second reservoir towards the engine.

Preferably the second supply tube and the third supply tube each feed into a fourth supply tube having first and second ends, at a second coupling means, the fourth supply tube extending from the second coupling means to the engine.

Preferably the second coupling means is in the form of a Y-shaped coupling which houses a non-return valve which prevents the second and third supply tubes from transmitting gas into each other.

The Y-shaped coupling allows the first fuel to be harmonised with the second fuel before being delivered to the engine. Such a coupling may be used to provide either a dedicated fuel source or may be used to provide one fuel source in a dual fuelled system.

When the first fuel is in the form of a compressed gas, it is generally held at a high pressure. For example, it can be stored at pressures as high as 200 bar (3000 psi) to 250 bar (3600 psi) (or higher). When the second fuel is in the form of a liquid gas, it is stored as a low temperature fuel or a cryogenic fuel (very low temperature). Under such circumstances the stored pressures are generally much lower than the pressures at which the first fuel is stored. Under such circumstances the one or more none return valves in the Y-shaped coupler ensure that only fuel at a single pressure enters the fourth supply tube.

The second coupling could be any suitable shape such as T shaped or cross shaped, for example.

Advantageously the engine system further comprises a second cut off switch positioned between the first and second ends of the fourth supply tube. The second shut off valve is activated by the ignition switch.

Conveniently the fuel supply carried by the fourth supply tube passes through a filter positioned between the first and second ends of the fourth supply tube before being delivered to the engine.

The invention will now be further described by way of example only with reference to the accompanying drawings in which;

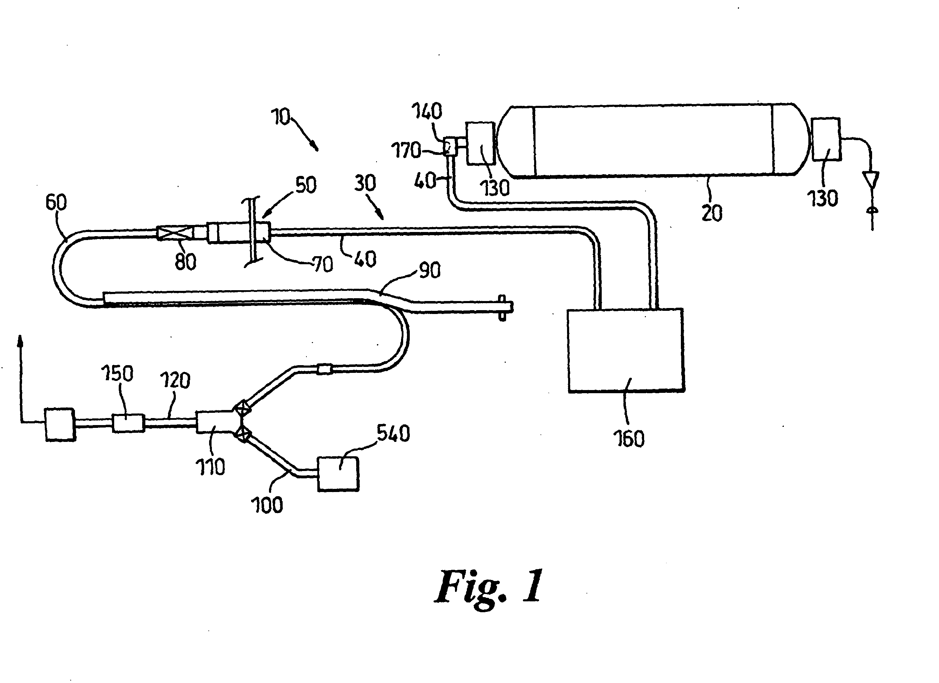

Figure 1 is a schematic representation of an engine system according to the first aspect of the present invention;
Figure 2 is a schematic representation of a vehicle according to a second aspect of the present invention;
Figure 3 and Figure 4 are more detailed representations of a vehicle according to the present invention.

Referring to the Figures, an engine system according to a first aspect of the present invention is designated generally by the reference numeral 10. The engine system 10 is a dual-fuel engine system adapted to run on either diesel, or diesel and natural gas. The engine system 10 comprises a first reservoir 20 adapted to contain within it compressed natural gas. The reservoir 20 is connected to the engine (not shown) by means of a supply conduit 30. The supply conduit comprises a first supply pipe 40 extending from the reservoir 20 towards the engine. One end of the first supply pipe is connected to the reservoir 20, and a second end is connected to a coupling means 50. A second supply pipe 60 extends from the coupling means 50 towards the engine.

The coupling device 50 comprises a break-away coupling 70 and a coupling nozzle 80 connected to the second supply pipe 60.

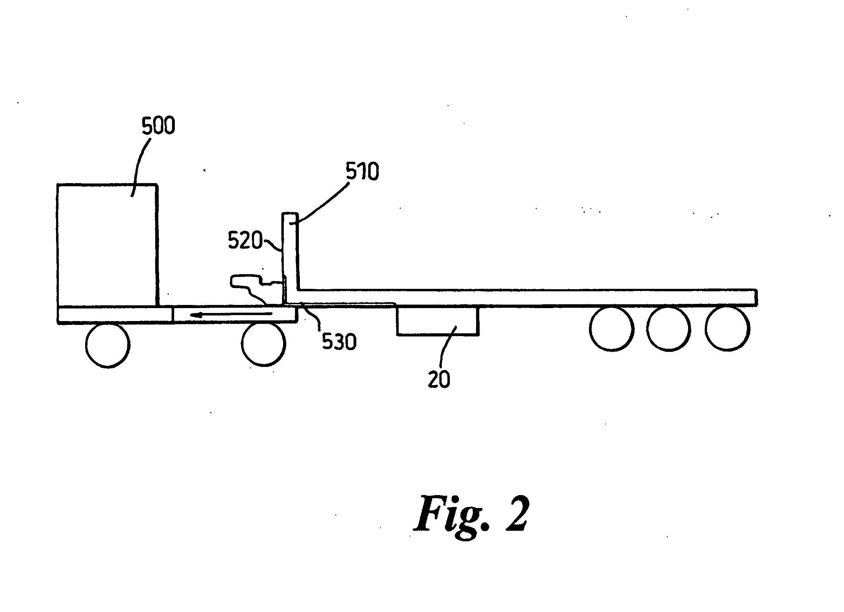

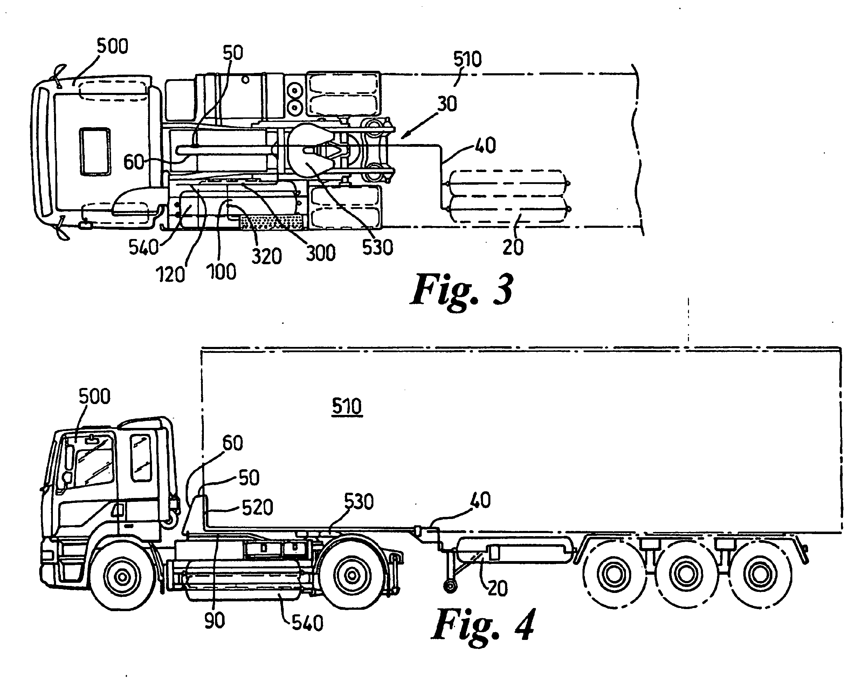

The engine system 10 is adapted to be installed on a vehicle as shown in Figures 2, 3 and 4 comprising a tractor unit 500 and a semi-trailer 510. The semi-trailer has a bulkhead 520, and is connected to the tractor unit 500 by means of the fifth wheel 530.

The coupling means 50 is positioned at the bulkhead 520 of the semi-trailer. The first supply pipe 40 is made from stainless steel, and second supply pipe 60 is made from stainless steel braided hose.

In order to ensure that the pipe 60 does not foul the trailer during a turning operation, the pipe 60 is mounted on a swivel unit 90 which rotates about a pivot point at the fifth wheel 530. The swivel unit 90 is adapted to turn through approximately 180° and thus ensures that the pipe 60 does not foul the trailer during turning operations. The swivel unit 90 may be in the form of a boom.

The engine system 10 further comprises a second reservoir 540 containing liquid natural gas. The second reservoir is connected to the engine by means of a third supply pipe 100 which extends from the second reservoir to a second coupling means 110. The second coupling means comprises a Y-shaped coupler which couples the second and third supply pipes 60, 100 to a fourth supply pipe 120 which extends from the second coupling means 110 to the engine. The second coupling means 110 includes two non-return valves 300, 320 connected to each of the second and third supply pipes 60, 100 respectively in order to ensure that neither of the supply pipes 60, 100 supplies gas to the other pipe.

The coupler 110 also serves to harmonise the flow of gas within the engine system 10. The first fuel stored in reservoir 20 is formed as a compressed gas and will therefore have a pressure in the region of 200 to 250 bar. The second fuel stored in reservoir 540 is in the form of a liquid gas and is stored at a low temperature. Under these circumstances the liquid gas contained in reservoir 540 will be stored at a much lower pressure than that at which the first fuel is stored. The pressure of the liquid gas stored in the reservoir 540 will be in the region of 20 to 120 psi. To ensure that the differing pressures do not cause damage, the coupler 110 comprises non-return valves and a switching system which can be used to determine when to feed fuel from the different reservoirs 20, 540.

The tank 20 is conveniently located on the chassis of the semi-trailer 510 whilst the second reservoir 540 is mounted on the chassis of the tractor unit 500.

In use, should the driver attempt to disengage the semi-trailer 510 from the tractor unit 500 without first switching off the gas supply and disconnecting the gas supply from the engine system 10, the break-away coupling 70 will allow a controlled break away condition to occur under such circumstances whereby it releases rapidly stored pressure to prevent hose whip and then shuts to prevent further flow of gas.

The unit cannot be reassembled without the correct resetting tool and a qualified engineer is required to reassemble the unit. When the qualified engineer is reassembling the unit, he can assess whether any damage and/or dirt ingress has taken place.

The engine system further comprises two pressure relief devices 130 associated with the first reservoir 20. The pressure relief devices 130 ensure that in the event of fire, pressure is released from the reservoir 20.

The system further comprises a first electronic shut off valve 140 also associated with reservoir 20 which ensures that supply from the reservoir 20 is shut off in the event that ignition is switched off or the electricity supply is disconnected from the trailer 10.

The system 10 comprises a second electronic shut off valve 150 located on the fourth supply pipe 120 for ensuring cut off of gas supply in the event that the ignition to the vehicle is switched off.

The engine system 10 further comprises a controller 160 which regulates the pressure from the reservoir 20 and reduces the pressure from typically 200 or 250 bars to approximately 8 bar.

The system 10 also comprises an excess flow valve 170 positioned down stream (or upstream) of the first shut off valve 140. Should the flow of gas from the tank exceed the flow rate experienced during normal use, the excess flow valve will moderate the flow.

By means of the present invention it is possible to locate a tank for containing compressed natural gas on the semi-trailer of an articulated vehicle. Because there is more space available on the semi-trailer, a larger tank may be used thus allowing vehicles to travel further distances before having to refuel.

## Claims

1. An engine system (10) for use with a vehicle comprising a first unit and a second unit, the engine system comprising;
an engine;
a first reservoir (20) for holding a first fuel;
a supply system extending from the first reservoir (20) to the engine, the supply system (30) comprising a first supply tube (40) having first and second ends and extending from the first reservoir (20) to a first coupling means (50), and a second supply tube (60) having first and second ends extending from the first coupling means (50) towards the engine, the first and second supply tubes (40; 60) being releasably sealingly attachable to one another at their respective first ends, by means of the first coupling means (50);
**characterised in that** the engine is locatable on the first unit and the first reservoir is locatable on the second unit, the engine system (10) further comprises support means for supporting the supply system (30), which support means is adapted to rotate through substantially 180° about an axis,
and **in that** the first coupling means (50) is adapted to withstand a predetermined tension between the first and second supply tubes (40; 60), and the first coupling means (50) being adapted to cause uncoupling of the first and second supply tubes (40; 60) when the tension between the supply tubes (40; 60) is greater than the predetermined tension, the first coupling means (50) further comprising sealing means for sealing the first end of the first supply tube (40) after uncoupling of the first and second supply tubes (40; 60).

2. An engine system (10) as claimed in Claim 1 wherein the first coupling means (50) comprises s break-away coupling (70).

3. An engine system (10) as claimed in Claim 1 or Claim 2 wherein the first coupling means (50) further comprises second sealing means for sealing the first end of the second supply tube (60).

4. An engine (10) system according to any one of the preceding claims wherein the first coupling means (50) further comprises manual de-coupling means.

5. An engine system (10) as claimed in Claim 4 wherein the manual de-coupling means comprises a sliding collar.

6. An engine system (10) as claimed in any one of the preceding claims wherein one or both of the first and second supply tubes (40; 60) comprises a flexible pipe.

7. An engine system (10) as claimed in any one of Claims 1 to 5 wherein one or both of the first and second supply tubes (40; 60) comprises a fixed pipe.

8. An engine system (10) according to any one of the preceding claims wherein the first sealing means comprises a coupling nozzle sealingly attached to the first supply tube (40).

9. An engine system (10) according to Claim 3 wherein the second sealing means comprises a coupling nozzle sealingly attached to the second supply tube (60).

10. An engine system (10) according to any one of the preceding claims further comprising at least one pressure relief device (130) associated with the first reservoir (20).

11. An engine system (10) according to any one of the preceding claims further comprising a first shut off valve (140) associated with the first reservoir (20).

12. An engine system (10) according to Claim 11 wherein the first shut off valve (140) is electronic.

13. An engine system (10) according to any one of the preceding claims further comprising a controller (160) positioned between the first and second ends of the first supply tube (40).

14. An engine system (10) according to any one of the preceding claims further comprising a second reservoir (540) for holding a second fuel.

15. An engine system (10) according to any one of the preceding claims further comprising a third reservoir for holding a third fuel.

16. An engine system (10) according to Claim 15 wherein the first fuel is compressed natural gas, the second fuel is liquid natural gas and the third fuel is diesel.

17. An engine system (10) according to any one of Claims 14 to 16 further comprising a third supply tube (100) extending from the second reservoir (540) towards the engine.

18. An engine system (10) according to Claim 17 wherein the second supply tube (60) and the third supply tube (100) each feed into a fourth supply tube (120) having first and second ends at a second coupling means (110), the fourth supply tube (120) extending from the second coupling means (110) to the engine.

19. An engine system (10) as claimed in Claim 18 wherein the second coupling means (110) comprises a Y-shaped connector.

20. An engine system according to Claim 18 or Claim 19 wherein the second coupling means (110) comprises a non-retum valve (300; 320).

21. An engine system according to any one of Claims 18 to 20 further comprising a second cut off switch (150) positioned between the first and second ends of the fourth supply tube (120).

22. An engine system according to Claim 21 wherein the second cut off switch (150) is electronic.

23. An engine system according to any one of Claims 18 to 22 further comprising a filter located between the first and second ends of the fourth supply tube (120).

24. An engine system according to any one of the preceding claims wherein the first unit is a tractor unit and the second unit is a trailer.

25. A vehicle comprising a first unit and a second unit attachable to the first unit, and further comprising an engine system (10) according to any one of the preceding claims.

26. A vehicle according to Claim 25 wherein the first unit is a tractor unit (500) and the second unit is a trailer (510).

27. A vehicle according to Claim 26 wherein the trailer is a semi-trailer (510)..

28. A vehicle according to any one of Claims 25 to 27 wherein the engine is located on the first unit (500), the first reservoir (20) is located on the second unit (510), and the second and third reservoirs are located on the first unit (500).

29. A vehicle according to any one of Claims 25 to 28 wherein the first coupling means (50) is located at the semi-trailer bulkhead (520).

30. A vehicle according to any one of Claims 25 to 29 wherein the support means comprises a swivel unit rotatable about the fifth wheel (530) of the semi-trailer (510).

31. A vehicle according to any one of Claims 25 to 30 wherein the tractor unit (500) comprises a chassis, and the support means is mounted on the chassis.

## Patentansprüche

1. Motorsystem (10) zur Verwendung mit einem Fahrzeug, das eine erste Einheit und eine zweite Einheit umfaßt, wobei das Motorsystem aufweist:
einen Motor,
ein erstes Reservoir (20) zum Aufnehmen eines ersten Kraftstoffs,
ein Zufuhrsystem, das sich von dem ersten Reservoir (20) zu dem Motor erstreckt, wobei das Zuführsystem (30) eine erste Zufuhrrohrleitung (40), die erste und zweite Enden aufweist und sich von dem ersten Reservoir (20) zu einem ersten Kopplungsmittel (50) erstreckt, sowie eine zweite Zufuhrrohrleitung (60), die erste und zweite Enden besitzt und sich von dem ersten Kopplungsmittel (50) zu dem Motor erstreckt, aufweist, wobei die ersten und zweiten Zufuhrrohrleitungen (40;60) mittels des ersten Kopplungsmittels (50) lösbar und abdichtend aneinander an ihren jeweiligen ersten Enden anbringbar sind,
**dadurch gekennzeichnet, daß** der Motor an der ersten Einheit und das erste Reservoir an der zweiten Einheit angeordnet werden kann, wobei das Motorsystem (10) ferner Haltemittel zum Halten des Zuführsystems (30) umfaßt, welches Haltemittel eingerichtet ist, über im wesentlichen 180° um eine Achse zu drehen,
und daß das erste Kopplungsmittel (50) eingerichtet ist, einer vorbestimmten Zugkraft zwischen den ersten und zweiten Zufuhrrohrleitungen (40;60) zu widerstehen, und das erste Kopplungsmittel (50) eingerichtet ist, ein Entkoppeln der ersten und zweiten Zufuhrrohrleitungen (40;60) zu bewirken, wenn die Zugkraft zwischen den Zufuhrrohrleitungen (40;60) größer ist als die vorbestimmte Zugkraft, wobei das erste Kopplungsmittel (50) ferner Dichtungsmittel zum Abdichten des ersten Endes der ersten Zufuhrrohrleitung (40) nach dem Entkoppeln der ersten und zweiten Zufuhrrohrleitungen (40;60) umfaßt.

2. Ein Motorsystem (10) gemäß Anspruch 1, wobei das erste Kopplungsmittel (50) eine Losbrechkopplung (70) umfaßt.

3. Ein Motorsystem (10) gemäß Anspruch 1 oder Anspruch 2, wobei das erste Kopplungsmittel (50) ferner zweite Dichtungsmittel zum Dichten des ersten Endes der zweiten Zufuhrrohrleitung (60) umfaßt.

4. Ein Motorsystem (10) gemäß einem der vorstehenden Ansprüche, wobei das erste Kopplungsmittel (50) ferner ein manuelles Entkopplungsmittel umfaßt.

5. Ein Motorsystem (10) gemäß Anspruch 4, wobei das manuelle Entkopplungsmittel einen Gleitkragen umfaßt.

6. Ein Motorsystem (10) gemäß einem der vorstehenden Ansprüche, wobei eines oder beide der ersten und zweiten Zufuhrrohrleitungen (40;60) ein flexibles Rohr oder Schlauch umfaßt/umfassen.

7. Ein Motorsystem (10) gemäß einem der Ansprüche 1 bis 5, wobei eines oder beide der ersten und zweiten Zufuhrrohrleitungen (40;60) ein feststehendes Rohr bzw. Schlauch umfaßt/umfassen.

8. Ein Motorsystem (10) gemäß einem der vorstehenden Ansprüche, wobei das erste Dichtungsmittel eine Kopplungsdüse umfaßt, die dichtend an der ersten Zufuhrrohrleitung (40) angebracht ist.

9. Ein Motorsystem (10) gemäß Anspruch 3, wobei das zweite Dichtungsmittel eine Kopplungsdüse umfaßt, die dichtend an der zweiten Zufuhrrohrleitung (60) angebracht ist.

10. Ein Motorsystem (10) gemäß einem der vorstehenden Ansprüche, ferner mit mindestens einer Druckentlastungseinrichtung (130), die dem ersten Reservoir (20) zugeordnet ist.

11. Ein Motorsystem (10) gemäß einem der vorstehenden Ansprüche, ferner mit einem ersten Abschaltventil (140), das dem ersten Reservoir (20) zugeordnet ist.

12. Ein Motorsystem (10) gemäß Anspruch 11, wobei das erste Abschaltventil (140) elektronisch ist.

13. Ein Motorsystem (10) gemäß einem der vorstehenden Ansprüche, ferner mit einem Controller (160), der zwischen den ersten und zweiten Enden des ersten Zufuhrrohrleitung (40) positioniert ist.

14. Ein Motorsystem (10) gemäß einem der vorstehenden Ansprüche, ferner mit einem zweiten Reservoir (540) zum Aufnehmen eines zweiten Kraftstoffs.

15. Ein Motorsystem (10) gemäß einem der vorstehenden Ansprüche, ferner mit einem dritten Reservoir zum Aufnehmen eines dritten Kraftstoffs.

16. Ein Motorsystem (10) gemäß Anspruch 15, wobei der erste Kraftstoff komprimiertes Erdgas, der zweite Kraftstoff flüssiges Erdgas und der dritte Kraftstoff Diesel ist.

17. Ein Motorsystem (10) gemäß einem der Ansprüche 14 bis 16, ferner mit einer dritten Zufuhrrohrleitung (100), die sich von dem zweiten Reservoir (540) zu dem Motor erstreckt.

18. Ein Motorsystem (10) gemäß Anspruch 17, wobei die zweite Zufuhrrohrleitung (60) und die dritte Zufuhrrohrleitung (100) jeweils in eine vierte Zufuhrrohrleitung (120) münden, die erste und zweite Enden an einem zweiten Kopplungsmittel (110) besitzt, wobei sich die vierte Zufuhrrohrleitung (120) von dem zweiten Kopplungsmittel (110) zu dem Motor erstreckt.

19. Ein Motorsystem (10) gemäß Anspruch 18, wobei das zweite Kopplungsmittel (110) einen Y-förmigen Verbinder umfaßt.

20. Ein Motorsystem gemäß Anspruch 18 oder 19, wobei das zweite Kopplungsmittel (110) ein Rückschlagventil (300;320) umfaßt.

21. Ein Motorsystem gemäß einem der Ansprüche 18 bis 20, ferner mit einem zweiten Unterbrechungsschalter (150), der zwischen den ersten und zweiten Enden der vierten Zufuhrrohrleitung (120) positioniert ist.

22. Ein Motorsystem gemäß Anspruch 21, wobei der zweite Unterbrechungsschalter (150) elektronisch ist.

23. Ein Motorsystem gemäß einem der Ansprüche 18 bis 22, ferner mit einem Filter, der sich zwischen dem ersten und zweiten Enden der vierten Zufuhrrohrleitung (120) befindet.

24. Ein Motorsystem gemäß einem der vorstehenden Ansprüche, wobei die erste Einheit eine Traktoreinheit und die zweite Einheit ein Anhänger ist.

25. Ein Fahrzeug mit einer ersten Einheit und einer zweiten Einheit, die an der ersten Einheit anbringbar ist, und ferner mit einem Motorsystem (10) gemäß einem der vorstehenden Ansprüche.

26. Ein Fahrzeug gemäß Anspruch 25, wobei die erste Einheit eine Traktoreinheit (500) und die zweite Einheit ein Anhänger (510) ist.

27. Ein Fahrzeug gemäß Anspruch 26, wobei der Anhänger ein Auflieger (510) ist.

28. Ein Fahrzeug gemäß einem der Ansprüche 25 bis 27, wobei der Motor sich an der ersten Einheit (500) befindet, das erste Reservoir (20) sich an der zweiten Einheit (510) befindet und die zweiten und dritten Reservoirs sich an der ersten Einheit (500) befinden.

29. Ein Fahrzeug gemäß einem der Ansprüche 25 bis 28, wobei das erste Kopplungsmittel (50) sich an der Auflieger-Schottwand (520) befindet.

30. Ein Fahrzeug gemäß einem der Ansprüche 25 bis 29, wobei das Haltemittel eine Dreheinheit umfaßt, die um das fünfte Rad (530) des Aufliegers (510) drehbar ist.

31. Ein Fahrzeug gemäß einem der Ansprüche 25 bis 30, wobei die Traktoreinheit (500) ein Chassis umfaßt, und das Haltemittel an dem Chassis befestigt ist.

## Revendications

1. Système de moteur (10) destiné à être utilisé avec un véhicule comprenant une première unité et une seconde unité, le système de moteur, comprenant :
un moteur ;
un premier réservoir (20) pour contenir un premier carburant ;
un système d'alimentation s'étendant du premier réservoir (20) au moteur, le système d'alimentation (30) comprenant un premier tube d'alimentation (40) ayant des première et seconde extrémités et s'étendant du premier réservoir (20) à de premiers moyens de couplage (50), et un deuxième tube d'alimentation (60) ayant des première et seconde extrémités s'étendant des premiers moyens de couplage (50) vers le moteur, les premier et deuxième tubes d'alimentation (40 ; 60) pouvant être fixés de manière amovible et étanche l'un à l'autre au niveau de leurs premières extrémités respectives, au moyen des premiers moyens de couplage (50) ;
**caractérisé en ce que** le moteur peut être positionné sur la première unité et le premier réservoir peut être positionné sur la seconde unité, le système de moteur (10) comprend en outre des moyens de support pour supporter le système d'alimentation (30), lesquels moyens de support sont adaptés pour tourner sensiblement de 180° autour d'un axe,
et **en ce que** les premiers moyens de couplage (50) sont adaptés pour résister à une tension prédéterminée entre les premier et deuxième tubes d'alimentation (40 ; 60) et les premiers moyens de couplage (50) étant adaptés pour provoquer le découplage des premier et deuxième tubes d'alimentation (40 ; 60) lorsque la tension entre les tubes d'alimentation (40 ; 60) est supérieure à la tension prédéterminée, les premiers moyens de couplage (50) comprenant en outre des moyens d'étanchéité pour réaliser l'étanchéité de la première extrémité du premier tube d'alimentation (40) après le découplage des premier et deuxième tubes d'alimentation (40 ; 60).

2. Système de moteur (10) selon la revendication 1, dans lequel les premiers moyens de couplage (50) comprennent un couplage détachable (70).

3. Système de moteur (10) selon la revendication 1 ou la revendication 2, dans lequel les premiers moyens de couplage (50) comprennent en outre des seconds moyens d'étanchéité pour réaliser l'étanchéité de la première extrémité du deuxième tube d'alimentation (60) .

4. Système de moteur (10) selon l'une quelconque des revendications précédentes, dans lequel les premiers moyens de couplage (50) comprennent en outre des moyens de découplage manuels.

5. Système de moteur (10) selon la revendication 4, dans lequel les moyens de découplage manuels comprennent un collier coulissant.

6. Système de moteur (10) selon l'une quelconque des revendications précédentes, dans lequel l'un ou les deux des premier et deuxième tubes d'alimentation (40 ; 60) comprennent un tuyau flexible.

7. Système de moteur (10) selon l'une quelconque des revendications 1 à 5, dans lequel l'un ou les deux des premier et deuxième tubes d'alimentation (40 ; 60) comprennent un tuyau fixe.

8. Système de moteur (10) selon l'une quelconque des revendications précédentes, dans lequel les premiers moyens d'étanchéité comprennent une buse de couplage fixée de manière étanche au premier tube d'alimentation (40).

9. Système de moteur (10) selon la revendication 3, dans lequel les seconds moyens d'étanchéité comprennent une buse de couplage fixée de manière étanche sur le deuxième tube d'alimentation (60).

10. Système de moteur (10) selon l'une quelconque des revendications précédentes, comprenant en outre au moins un limiteur de pression (130) associé au premier réservoir (20).

11. Système de moteur (10) selon l'une quelconque des revendications précédentes, comprenant en outre une première soupape d'arrêt (140) associée au premier réservoir (20).

12. Système de moteur (10) selon la revendication 11, dans lequel la première soupape d'arrêt (140) est électronique.

13. Système de moteur (10) selon l'une quelconque des revendications précédentes, comprenant en outre un contrôleur (160) positionné entre les première et seconde extrémités du premier tube d'alimentation (40).

14. Système de moteur (10) selon l'une quelconque des revendications précédentes, comprenant en outre un deuxième réservoir (540) pour contenir un deuxième carburant.

15. Système de moteur (10) selon l'une quelconque des revendications précédentes, comprenant en outre un troisième réservoir pour contenir un troisième carburant.

16. Système de moteur (10) selon la revendication 15, dans lequel le premier carburant est du gaz naturel comprimé, le deuxième carburant est du gaz naturel liquide et le troisième carburant est du gas-oil.

17. Système de moteur (10) selon l'une quelconque des revendications 14 à 16, comprenant en outre un troisième tube d'alimentation (100) s'étendant du deuxième réservoir (540) vers le moteur.

18. Système de moteur (10) selon la revendication 17, dans lequel le deuxième tube d'alimentation (60) et le troisième tube d'alimentation (100) sont chacun alimentés dans un quatrième tube d'alimentation (120) ayant des première et seconde extrémités au niveau de seconds moyens de couplage (110), le quatrième tube d'alimentation (120) s'étendant à partir des seconds moyens de couplage (110) jusqu'au moteur.

19. Système de moteur (10) selon la revendication 18, dans lequel les seconds moyens de couplage (110) comprennent un connecteur en forme de Y.

20. Système de moteur selon la revendication 18 ou la revendication 19, dans lequel les seconds moyens de couplage (110) comprennent une soupape antiretour (300 ; 320).

21. Système de moteur selon l'une quelconque des revendications 18 à 20, comprenant en outre un second interrupteur (150) positionné entre les première et seconde extrémités du quatrième tube d'alimentation (120).

22. Système de moteur selon la revendication 21, dans lequel le second interrupteur (150) est électronique.

23. Système de moteur selon l'une quelconque des revendications 18 à 22, comprenant en outre un filtre positionné entre les première et seconde extrémités du quatrième tube d'alimentation (120).

24. Système de moteur selon l'une quelconque des revendications précédentes, dans lequel la première unité est une unité de tracteur et la seconde unité est une remorque.

25. Véhicule comprenant une première unité et une seconde unité pouvant être fixée à la première unité, et comprenant en outre un système de moteur (10) selon l'une quelconque des revendications précédentes.

26. Véhicule selon la revendication 25, dans lequel la première unité est une unité de tracteur (500) et la seconde unité est une remorque (510).

27. Véhicule selon la revendication 26, dans lequel la remorque est une semi-remorque (510).

28. Véhicule selon l'une quelconque des revendications 25 à 27, dans lequel le moteur est positionné sur la première unité (500), le premier réservoir (20) est positionné sur la seconde unité (510) et les deuxième et troisième réservoirs sont positionnés sur la première unité (500).

29. Véhicule selon l'une quelconque des revendications 25 à 28, dans lequel les premiers moyens de couplage (50) sont positionnés au niveau du tablier (520) de la semi-remorque.

30. Véhicule selon l'une quelconque des revendications 25 à 29, dans lequel les moyens de support comprennent une unité pivotante pouvant tourner autour de la cinquième roue (530) de la semi-remorque (510).

31. véhicule selon l'une quelconque des revendications 25 à 30, dans lequel l'unité de tracteur (500) comprend un châssis et les moyens de support sont montés sur le châssis.
